# EUROPÄISCHE PATENTSCHRIFT

(11) **EP 1 334 857 B1**
(45) Veröffentlichungstag und Bekanntmachung des Hinweises auf die Patenterteilung: **05.04.2006**
(21) Anmeldenummer: 03000627.4
(22) Anmeldetag: 15.01.2003
(51) Int. Cl.: B60J 7/00

(54) **Sonnenschutzbaugruppe für ein Fahrzeugdach**
Sunshade for vehicle roof
Pare-soleil pour toit de véhicule

(30) Priorität: 07.02.2002 DE 10205068
(43) Veröffentlichungstag der Anmeldung: 13.08.2003
(73) Patentinhaber: ArvinMeritor GmbH, 63128 Dietzenbach (DE)
(72) Erfinder: Messerschmidt, Martin, 55128 Mainz (DE); Paul, Thorsten, 55296 Lörzweiler (DE)
(74) Vertreter: Sties, Jochen

(56) Entgegenhaltungen:
- EP-A- 0 767 083
- DE-A- 3 810 888
- DE-C- 19 910 950
- US-A- 4 923 244
- US-A- 6 161 893

## Beschreibung

Die Erfindung betrifft eine Sonnenschutzbaugruppe für ein Fahrzeugdach gemäß den Ansprüchen 1 oder 2.

Eine Sonnenschutzbaugruppe ist im Stand der Technik als sogenanntes Sonnenschutzrollo bekannt, das einer lichtdurchlässigen Öffnung im Fahrzeugdach zugeordnet ist. Die lichtdurchlässige Öffnung kann beispielsweise ein feststehendes Panoramafenster oder aber ein transparenter Deckel eines Schiebedachs sein. Das Sonnenschutzrollo kann zwischen einer geöffneten Stellung, in der es den Lichtdurchtritt durch die Öffnung nicht behindert, und einer geschlossenen Stellung verstellt werden, in der es den Lichteinfall durch die Öffnung entweder vollständig verhindert oder wenigstens abschwächt. Je nach Konstruktion kann das Sonnenschutzrollo auch in verschiedenen Zwischenstellungen zwischen der geschlossenen und der geöffneten Stellung arretiert werden.

Herkömmliche Sonnenschutzrollos verwenden einen Sonnenschutz aus Stoff, der auf einer Welle aufgewickelt ist, wenn er sich in der geöffneten Stellung befindet. Diese Welle muß notwendigerweise gerade sein, damit sie drehbar ist. Da allerdings ein Fahrzeugdach üblicherweise gewölbt ist, führt die gerade verlaufende Welle zu einer merklichen Einschränkung der Kopffreiheit.

Aus der für Anspruch 1 Gattungsgemäßen US-A-6,161,893 ist eine Sonnenschutzbaugruppe bekannt, die aus einem Sonnenschutz aus Gewebe, zwei Führungsschienen für den Sonnenschutz sowie mehreren Spriegeln besteht, die am Sonnenschutz angebracht sind und in die Führungsschienen eingreifen. Am vordersten Spriegel greift ein Betätigungskabel an, das von einem Motor verstellt werden kann, so daß der Sonnenschutz in den Führungsschienen verstellt wird. Am hinteren Ende der Sonnenschutzbaugruppe ist eine Welle bzw. ein Wickelkörper angeordnet, auf dem der Sonnenschutz aufgewickelt werden kann, wobei das Betätigungskabel auch am Wickelkörper angreift.

Aus der US-A-4,923,244 ist eine Sonnenschutzbaugruppe bekannt, bei welcher der Sonnenschutz aus mehreren Lamellen aus Aluminiumblech besteht. Zum Antrieb der Lamellen ist gemäß einer Ausführungsform eine Schneckenwelle vorgesehen, die an Zähnen angreift, die an den beiden Enden des Lamellen vorgesehen sind. Am hinteren Ende der Sonnenschutzbaugruppe ist ein Aufnahmeraum vorgesehen, in welchem die Lamellen übereinanderliegend gestapelt werden können.

Aus der für Anspruch 2 gattungsgemäßen DE 38 10 888 A ist eine Sonnenschutzbaugrupe aus Stoff bekannt, die ein Paar Führungsschienen aufweist, in denen zickzackartige Ketteneinheiten geführt sind, die aus Führungsstücken und diese gelenkig verbindende Verbindungsglieder besteht. In der Offenstellung werden die Führungsstücke entlang der Führungsschienen nach hinten so zusammen geschoben, dass der Sonnenschutz gefaltet in einem Sammelraum aufgenommen wird.

Die Aufgabe der Erfindung besteht darin, eine Sonnenschutzbaugruppe zu schaffen, bei der eine größere Kopffreiheit möglich ist.

Zur Lösung dieser Aufgabe ist gemäß einem ersten Aspekt der Erfindung eine Sonnenschutzbaugruppe für ein Fahrzeugdach mit den Merkmalen des Anspruchs 1 vorgesehen. Im geöffneten Zustand befindet sich der Sonnenschutz im Sammelraum, in welchem er entweder lose abgelegt oder in einer bestimmten Weise zusammengefaltet werden kann. Der Sammelraum kann in jedem Fall an die Kontur des Fahrzeugdaches angepaßt werden, so daß sich eine maximale Kopffreiheit ergibt. Das Bedienelement, das drucksteif geführt und zugfest ist, wirkt hier nach Art einer flexiblen Zahnstange und greift an jedem der Gleiter an, so daß auch beim Zurückfahren des Sonnenschutzes hin zur geöffneten Stellung gewährleistet ist, daß der Abstand zwischen den einzelnen Gleitern aufrechterhalten wird, obwohl vom Sonnenschutz keine Druckkräfte übertragen werden können. Das Bedienelement kann zur Verstellung der Gleiter translatorisch in der Führungsschiene verstellt werden, also in diese hineingeschoben und aus dieser herausgezogen werden. Da zwischen den einzelnen Gleitern selbst keine Verbindung vorhanden ist, sondern die Gleiter nur durch den Sonnenschutz selbst miteinander verbunden sind, können sie im Sammelraum platzsparend translatorisch zusammengeschoben werden. Das Bedienelement ist mit einer Schneckenverzahnung versehen und die Gleiter mit einer Schnecke. Dann kann das Bedienelement rotatorisch in der Führungsschiene verstellt werden, also nach Art eines Schneckenantriebs arbeiten, so daß die Gleiter nach vorne bzw. nach hinten geschoben werden.

Zur Lösung dieser Aufgabe ist gemäß einem zweiten Aspekt der Erfindung eine Sonnenschutzbaugruppe für ein Fahrzeugdach mit den Merkmalen des Anspruchs 2 vorgesehen. Auch bei dieser Ausführungsform ist gewährleistet, daß beim Zurückschieben des Sonnenschutzes hin zum Sammelraum derjenige Teil des Sonnenschutzes straff gespannt bleibt, der zwischen den Führungsschienen angeordnet ist. Erst wenn die Gleiter in den Sammelraum eintreten, können sie beispielsweise platzsparend aufeinandergefaltet werden, wobei sich der Sonnenschutz entsprechend in Falten legt. Dies kann unterstützt werden, wenn die Verbindung zwischen den Gleitern jeweils durch eine Blattfeder gebildet ist. Wenn diese Blattfedern abwechselnd in entgegengesetzten Richtungen vorgespannt sind, kann beispielsweise eine Zickzack-Schichtung der Gleiter im Sammelraum erhalten werden.

Gemäß einer bevorzugten Ausführungsform der Erfindung ist vorgesehen, daß die Gleiter aus Kunststoff bestehen und auf die Seitenränder des Sonnenschutzes, der aus einem Gewebe oder aus einer Kunststoff-Folie bestehen kann, aufgespritzt sind. Auf diese Weise ergibt sich ein minimaler Herstellungsaufwand.

Vorzugsweise ist vorgesehen, daß mindestens einer der Gleiter eines Seitenrandes des Sonnenschutzes mit dem gegenüberliegenden Gleiter des anderen Seitenrandes durch einen Spriegel verbunden ist. Der Spriegel ist vorzugsweise gewölbt. Auf diese Weise läßt sich der Verlauf des Sonnenschutzes an die Kontur des Fahrzeugdaches anpassen, so daß sich auch im Bereich des Sonnenschutzes eine maximale Kopffreiheit ergibt.

Vorteilhafte Ausgestaltungen der Erfindung ergeben sich aus den Unteransprüchen.

Die Erfindung wird nachfolgend anhand dreier bevorzugter Ausführungsformen beschrieben, die in den beigefügten Zeichnungen dargestellt sind. In diesen zeigen:
- Figur 1 in einer schematischen, perspektivischen Ansicht ein Fahrzeugdach mit einer Sonnenschutzbaugruppe;
- Figur 2 einen schematischen Schnitt entlang der Ebene II-II von Figur 1;
- Figur 3 eine Sonnenschutzbaugruppe gemäß einer ersten Ausführungsform der Erfindung in einem Schnitt entlang der Ebene III-III von Figur 1;
- Figur 4 die Sonnenschutzbaugruppe gemäß der ersten Ausführungsform in einem Schnitt entlang der Ebene IV-IV von Figur 2;
- Figur 5 einen Schnitt entlang der Ebene V-V von Figur 4;
- Figur 6 in einer Schnittansicht entsprechend derjenigen von Figur 4 den Übergang von der Führungsschiene zum Sammelraum;
- Figur 7 in vergrößertem Maßstab den Ausschnitt VII von Figur 6;
- Figur 8 in einer Ansicht entsprechend derjenigen von Figur 4 eine Sonnenschutzbaugruppe gemäß einer zweiten Ausführungsform der Erfindung;
- Figur 9 einen Schnitt entlang der Ebene IX-IX von Figur 8;
- Figur 10 in einer schematischen Schnittansicht den Sammelraum der Sonnenschutzbaugruppe gemäß der zweiten Ausführungsform;
- Figur 11 in einer Ansicht entsprechend derjenigen von Figur 4 eine Sonnenschutzbaugruppe gemäß einer dritten Ausführungsform der Erfindung;
- Figur 12 einen Schnitt entlang der Ebene XII-XII von Figur 11; und
- Figur 13 in einer schematischen Schnittansicht den Sammelraum der Sonnenschutzbaugruppe gemäß der dritten Ausführungsform.

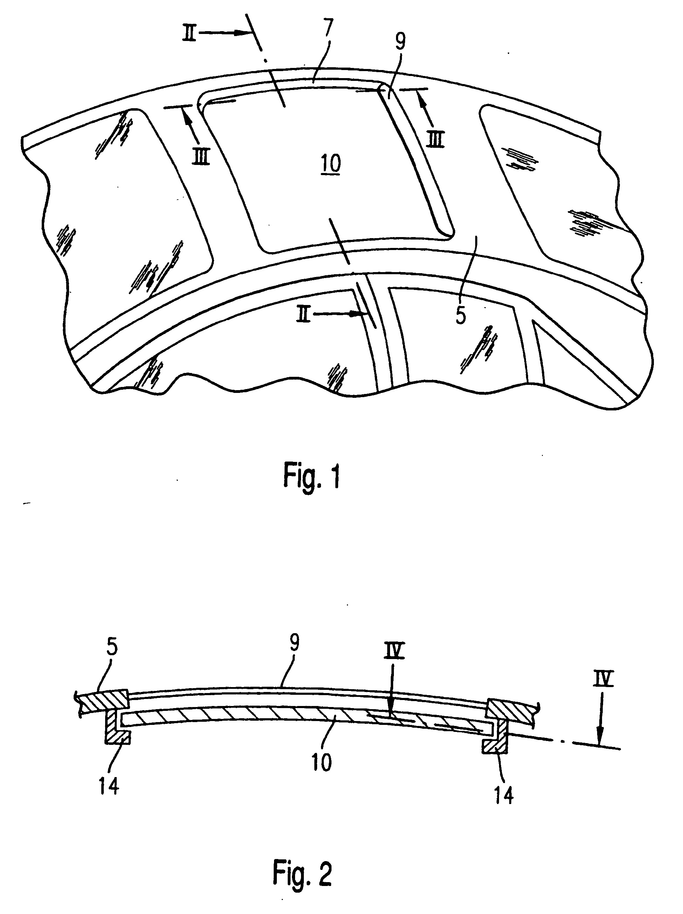

In Figur 1 ist schematisch ein Fahrzeugdach 5 gezeigt, das mit einer Dachöffnung 7 versehen ist. Die Dachöffnung 7 kann in bekannter Weise von einem Deckelteil 9 verschlossen werden, das in Figur 1 in seiner geöffneten, bezüglich des Fahrzeugs nach hinten verschobenen Stellung gezeigt ist. Das Deckelteil besteht aus einem transparenten Material, so daß es lichtdurchlässig ist.

Unterhalb des Deckelteils 9 ist ein Sonnenschutz 10 angeordnet, der zusammen mit später erläuterten Bauteilen, die zu seiner Fühnmg und Betätigung dienen, eine Sonnenschutzbaugruppe bildet. Der Sonnenschutz 10, der vorzugsweise aus einem Gewebe besteht, ist an seinen Seitenrändern, also dem in Figur 2 linken und rechten Rand, jeweils in einer Führungsschiene 14 geführt. Die beiden Führungsschienen erstrecken sich einander gegenüberliegend und parallel zueinander entlang den in Längsrichtung verlaufenden Seitenrändern der Dachöffnung 7.

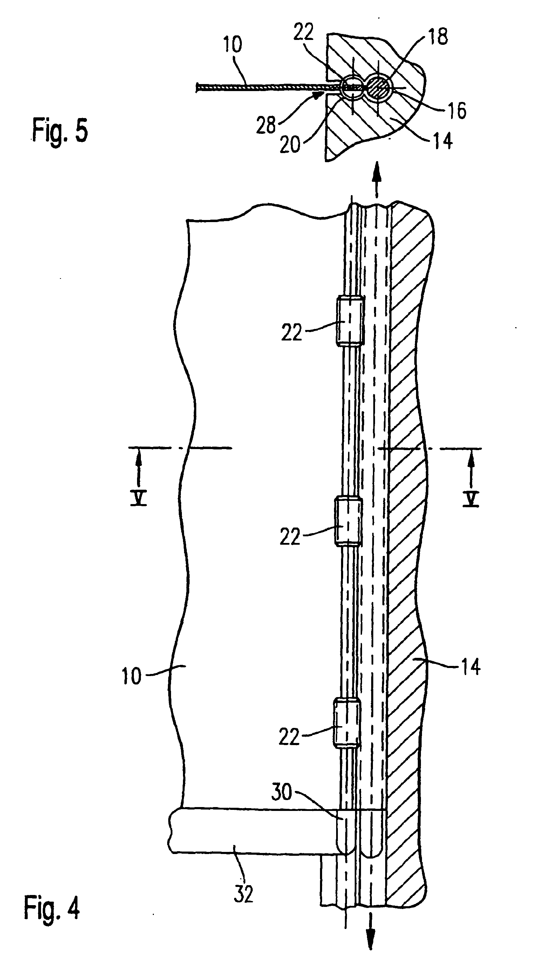

Jede Führungsschiene 14 ist mit zwei nebeneinanderliegenden Kanälen versehen (siehe insbesondere Figur 5), und zwar mit einem Aufnahmekanal 16 für ein Bedienelement 18 und einem Führungskanal 20 für Gleiter 22.

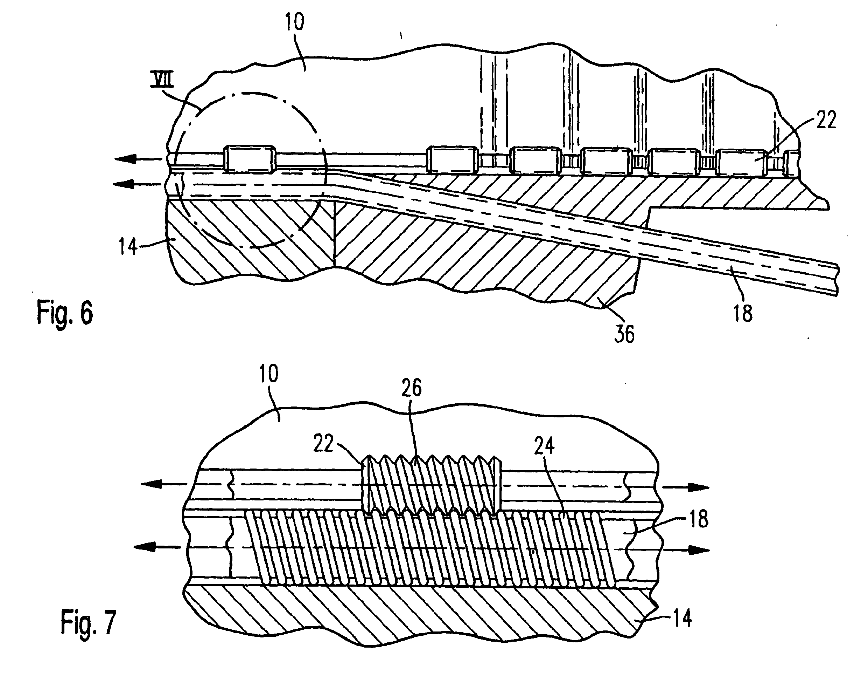

Das Bedienelement 18 ist ein in Längsrichtung sowohl drucksteif geführtes als auch zugfestes (nicht elastisches) Kabel, das auf seiner Außenfläche mit einer Gegenverzahnung 24 in der Form eines Rundgewindes oder einer Schnecke (siehe insbesondere Figur 7) versehen ist. Das Bedienelement 18 ist in dem Führungskanal 20 in Längsrichtung translatorisch verstellbar, wie durch die Pfeile in Figur 7 angedeutet ist. Zu diesem Zweck ist eine (nicht dargestellte) Antriebsvorrichtung vorgesehen. Die Antriebsvorrichtung betätigt in gleicher Weise das in der gegenüberliegenden Führungsschiene angeordnete Bedienelement in der Art, daß sich die beiden Bedienelemente mit derselben Geschwindigkeit in derselben Richtung bewegen.

Die Gleiter 22 sind aus Kunststoff bestehende Führungsteile für den Sonnenschutz 10, die unmittelbar auf das Gewebe des Sonnenschutzes aufgespritzt sind, so daß sie fest an diesem verankert sind. Jeder Gleiter 22 ist als kurzer Zylinder ausgeführt, der vom benachbarten Gleiter 22 mit einem Abstand entfernt ist, der ein mehrfaches seiner eigenen Länge beträgt. Jeder Gleiter ist auf seiner Außenfläche mit einem Mitnehmer versehen, der die Verbindung mit dem Bedienelement 18 herstellt. Hier ist der Mitnehmer als Verzahnung 26 (siehe Figur 7) ausgeführt, die an die Gegenverzahnung 24 des Bedienelementes 18 angepaßt ist.

Der Aufnahmekanal 16 und der Führungskanal 20 sind so nah beieinander angeordnet, daß sie sich schneiden, also zwischen ihnen keine Trennwand vorhanden ist. Auf diese Weise greift die Verzahnung 26 jedes Gleiters in die Gegenverzahnung 24 des Bedienelementes 18 ein, so daß die Gleiter, wenn das Bedienelement 18 im Aufnahmekanal 16 der Führungsschiene 14 verstellt wird, von diesem mitgenommen werden. Der mit den Gleitern 22 verbundene Sonnenschutz 10 verläuft dabei vom Führungskanal 20 durch einen Schlitz 28 in der Führungsschiene 14 in den Raum zwischen den einander gegenüberliegenden Führungsschienen.

Am Vorderrand des Sonnenschutzes 10 ist ein Abschlußteil 30 angebracht, das in gleicher Weise wie die Gleiter 22 in dem Führungskanal 20 der Führungsschiene 14 gleitet, jedoch nicht mit einer Verzahnung 26 versehen ist. Statt dessen ist das Abschlußteil fest mit dem Bedienelement 18 verbunden. Fest mit den beiden Abschlußteilen 30 ist ferner ein Spriegel 32 verbunden, der sich zwischen den beiden Abschlußteilen 30 erstreckt und den vorderen Rand des Sonnenschutzes 10 bildet. Der Spriegel 32 ist vorzugsweise relativ zum Fahrzeug betrachtet nach oben gewölbt, so daß er an den Verlauf des gekrümmten Fahrzeugdaches angepaßt ist. Auf diese Weise nimmt der Sonnenschutz einen ebenfalls gewölbten Verlauf ein, der in Figur 2 zu erkennen ist. Es können je nach Bedarf weitere Spriegel 32 vorgesehen sein, die sich dann zwischen einander gegenüberliegenden Gleitern 22 erstrecken.

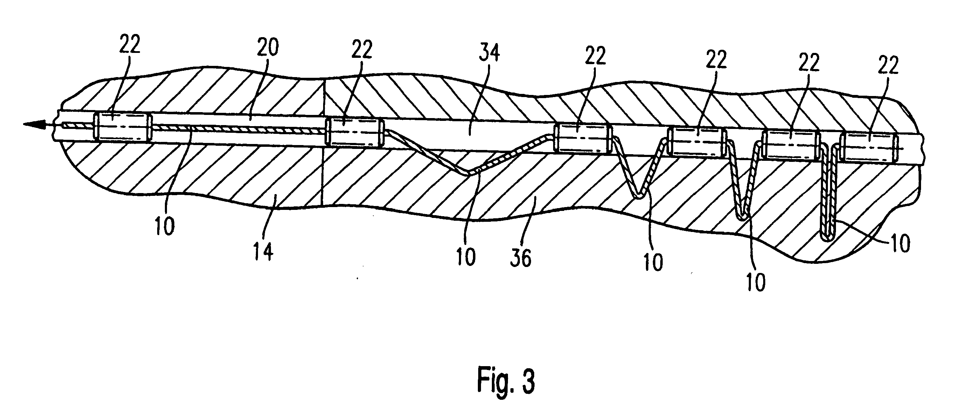

Die beiden Führungsschienen 14 gehen an ihrem in Fahrtrichtung des Fahrzeugs gesehen hinteren Ende in einen Sammelraum 34 über, der bei der ersten Ausführungsform in einer Sammelschiene 36 gebildet ist (siehe Figur 3). Der Sammelraum 34 ist hier als Fortführung des Führungskanals 20 der Führungsschiene 14 ausgebildet. Der Sonnenschutz 10 wird im Bereich zwischen den einander gegenüberliegenden Sammelschienen 36 dadurch platzsparend aufgenommen, daß die am Sonnenschutz 10 befestigten Gleiter 22 dort soweit zusammengeschoben werden, bis sie nahezu aneinander anliegen.

Wie in Figur 6 zu sehen ist, ist das Bedienelement 18 ab seinem Austreten aus dem Aufnahmekanal 16 der Führungsschiene 14 schräg durch die Sammelschiene 36 weg von den Gleitern 22 geführt. Auf diese Weise wird ein Eingriff zwischen der Verzahnung 26 der Gleiter 22 und der Gegenverzahnung 24 des Bedienelementes 18 nur dann herbeigeführt, wenn sich die Gleiter in der Führungsschiene 14 befinden; solange oder sobald sich die Gleiter 22 in der Sammelschiene 36 befinden, sind sie vom Bedienelement 18 entkoppelt.

Solange sich der Sonnenschutz 10 in seiner geöffneten Position befindet, wenn sich also der Spriegel 32 am hinteren Rand der Dachöffnung 7 des Fahrzeugdaches 5 befindet, sind alle Gleiter 22 im Sammelraum 34 der Sammelschiene 36 angeordnet. Der Sonnenschutz 10 hat dann also in der Längsrichtung des Fahrzeugs betrachtet seinen kompaktesten Zustand eingenommen. Soll der Sonnenschutz ausgehend von dieser geöffneten Stellung geschlossen werden, werden die beiden Bedienelemente 18 auf jeder Seite der Dachöffnung 7 parallel miteinander nach vorne in die Führungsschiene 14 hineingeschoben, wobei sie das Abschlußteil 30 in der Führungsschiene 14 nach vorne schieben. Dadurch wird der im Bereich der Sammelschiene 36 schlaffe Teil des Sonnenschutzes gespannt, bis dieser Teil des Sonnenschutzes eine solche Zugkraft auf das erste Paar von Gleitern 22 überträgt, daß deren Reibung überwunden wird und sie ebenfalls nach vorne mitgezogen werden. Sobald das erste Paar von Gleitern 22 aus dem Sammelraum 34 in den Führungskanal 20 der Führungsschiene 14 übertritt, greift die Verzahnung 26 der Gleiter 22 in die Gegenverzahnung 24 des Bedienelementes 18 ein. Dadurch ist der Abstand zwischen dem Abschlußteil 30 und dem ersten Paar von Gleitern 22 fixiert. Wenn das Bedienelement 18 weiter in die Führungsschiene eingeschoben wird, wiederholt sich dieser Vorgang, bis nach und nach sämtliche Paare von Gleitern 22 in die Führungsschiene 14 hineingezogen wurden und der Sonnenschutz 10 sich flächig zwischen den einander gegenüberliegenden Führungsschienen 14 erstreckt. Die Spannung, unter welcher der Sonnenschutz 10 in der Längsrichtung des Fahrzeugs steht, kann dabei durch die Reibungskraft der Gleiter 22 in der Sammelschiene 36 eingestellt werden. Je größer diese Reibung ist, desto größer muß auch die Spannung in der Längsrichtung sein, bevor der entsprechende Gleiter aus der Sammelschiene 36 in die Führungsschiene gezogen werden kann. In der Führungsschiene muß diese Reibungskraft nicht aufrechterhalten werden, da der Abstand zwischen benachbarten Gleitern aufgrund des Eingriffs zwischen der Verzahnung 26 der Gleiter 22 und der Gegenverzahnung 24 des Bedienelementes 18 fixiert ist. Auch kann die Spannung durch die Anzahl der Gleiter eingestellt werden.

Wenn der Sonnenschutz wieder in die geöffnete Stellung zurückgeschoben werden soll, werden die beiden Bedienelemente 18 parallel miteinander aus den Führungsschienen 14 herausgezogen. Dabei wird der Sonnenschutz 10 im Bereich zwischen den Führungsschienen 14 gleichmäßig zurückgeschoben, da die Gleiter 22 fest in das Bedienelement 18 eingreifen. Dadurch bleibt der Sonnenschutz 10 im Bereich zwischen den Fühnmgsschienen 14 auch beim Zurückschieben gespannt. Erst wenn die Gleiter 22 nach und nach in die Sammelschiene 36 übertreten und dadurch vom Bedienelement 18 abgekoppelt werden, kann sich der Sonnenschutz 10 in diesem Bereich entspannen, und er wird zusammengeschoben. Das Zurückschieben des Sonnenschutzes 10 ist beendet, wenn das Abschlußteil 30 sich am Ende der Führungsschiene 14 befindet; da die beiden Abschlußteile fest mit den Bedienelementen 18 verbunden sind, können die Bedienelemente dann nicht weiter zurückgezogen werden.

Abweichend vom hier gezeigten kreisförmigen Querschnitt für den Aufnahmekanal 16 und den Führungskanal 20 kann auch eine andere Querschnittsform verwendet werden. Es muß lediglich sichergestellt sein, daß der Mitnehmer an den Gleitern 22 mit dem Bedienelement 18 in Eingriff gebracht und wieder von diesem gelöst werden kann. Hierzu ist wie bei der ersten Ausführungsform eine Richtungsänderung des als flexible Zahnstange wirkenden Bedienelements besonders geeignet.

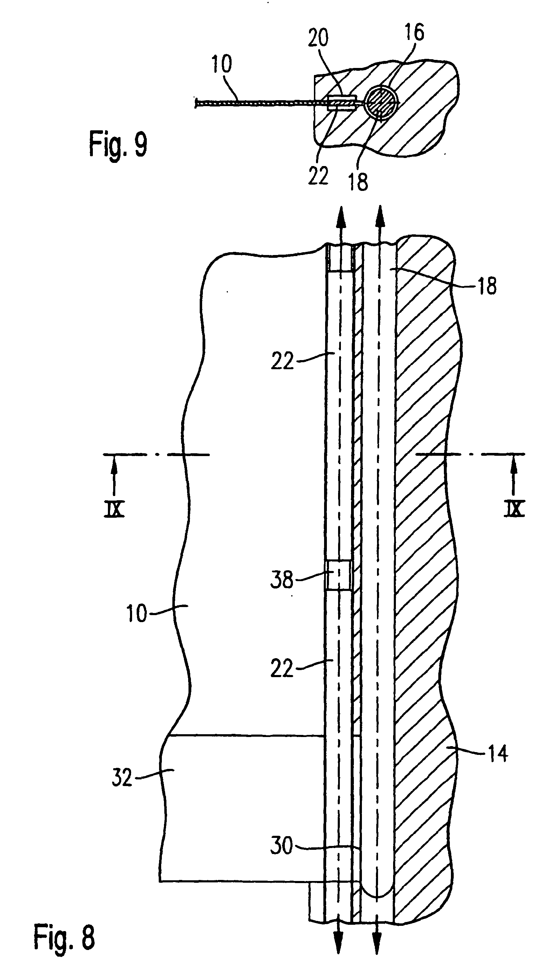

In den Figuren 8 bis 10 ist eine Sonnenschutzbaugruppe gemäß einer zweiten Ausführungsform gezeigt. Für die von der ersten Ausführungsform bekannten Bauteile werden dieselben Bezugszeichen verwendet, und es wird insoweit auf die obigen Erläuterungen verwiesen.

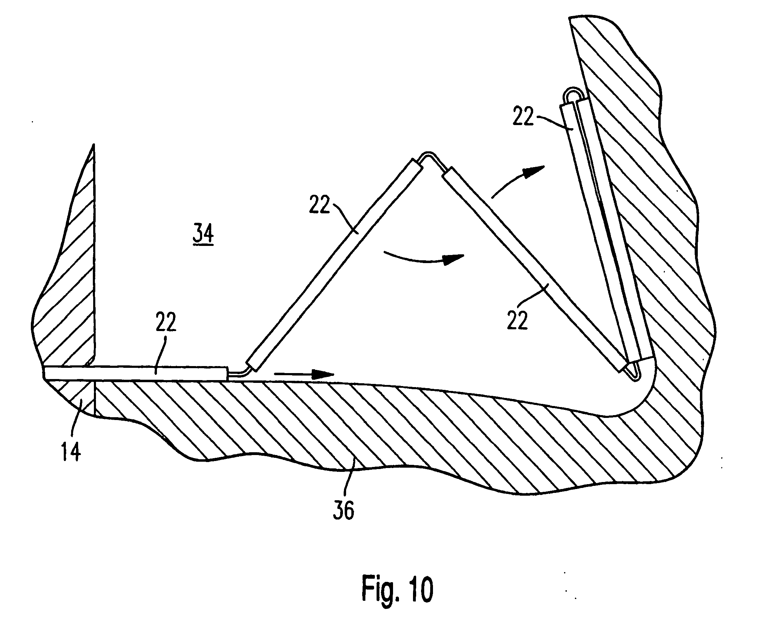

In gleicher Weise wie bei der ersten Ausführungsform wird bei der zweiten Ausführungsform ein zugfestes und drucksteif geführtes Bedienelement 18 verwendet, das in Längsrichtung in den Aufnahmekanal 16 der Führungsschiene 14 hineingeschoben bzw. aus diesem herausgezogen werden kann. Auch ist der Sonnenschutz 10 an seinen Seitenrändern mit Gleitern 22 versehen, die in dem Führungskanal 20 der Führungsschiene 14 verschiebbar aufgenommen sind. Im Unterschied zur ersten Ausführungsform sind die Gleiter 22 bei der zweiten Ausführungsform sehr viel länger, und der Abstand zwischen ihnen ist ein Bruchteil ihrer Länge. Auch sind die Gleiter 22 untereinander durch eine drucksteife Verbindung miteinander verbunden, die hier jeweils durch eine Blattfeder 38 gebildet ist. Weiterhin steht das Bedienelement 18 mit den Gleitern 22 nicht in Eingriff, sondern ist mit dem Sonnenschutz 10 lediglich durch das Abschlußteil 30 verbunden. Ein weiterer Unterschied zur ersten Ausführungsform besteht darin, daß der Aufnahmeraum 34 sehr viel größer ausgeführt ist, so daß die Gleiter 22 in ihm frei aufeinandergefaltet werden können (siehe insbesondere Figur 10).

Wenn der Sonnenschutz 10 aus seiner geöffneten Position, in der sich sämtliche Gleiter 22 im Sammelraum 34 befinden, in die geschlossene Position gebracht werden soll, in der die Dachöffnung 7 abgedeckt ist, werden die beiden Abschlußteile 30 mittels der beiden Bedienelemente 18 in der Führungsschiene 14 nach vorne geschoben. Dabei werden die Gleiter 22 der Reihe nach in den Führungskanal 20 in der Führungsschiene 14 hineingezogen. Die sich dabei einstellende Spannung des Sonnenschutzes 10 ist vorgegeben durch den Abstand der Gleiter 22 voneinander, der von den als drucksteife Verbindungen dienenden Blattfedern 38 aufrechterhalten wird. Aufgrund der Verbindung zwischen den einzelnen Gleitern muß der Sonnenschutz 10 keine so große Festigkeit haben wie bei der ersten Ausführungsform.

Wenn der Sonnenschutz 10 aus seiner geschlossenen Position in die geöffnete Position verstellt werden soll, werden die Bedienelemente 18 aus dem Fühnmgskanal 20 der Führungsschiene 14 herausgezogen. Diese Bewegung wird von den beiden Abschlußteilen 30 und die Blattfedern 38 von Gleiter zu Gleiter übertragen, so daß diese, beginnend mit dem hintersten, in den Sammelraum 34 hineingeschoben werden. Dort falten sich die Gleiter 22 platzsparend aufeinander, beispielsweise in Zickzack-Form, wie in Figur 10 gezeigt. Dies kann dadurch unterstützt werden, daß die Blattfedern 38 in abwechselnden Richtungen vorgespannt sind, also nach oben und nach unten. Wenn sämtliche Gleiter 22 in den Sammelraum 34 eingeschoben sind, ergibt sich dort ein platzsparend zusammengefaltetes Paket. Der Sonnenschutz 10 befindet sich zwischen den Gleitern 22 ebenfalls in zusammengefaltetem Zustand.

Bei einer alternativen, nicht in den Zeichnungen gezeigten Ausführungsform können anstelle der Blattfedern zwischen den Gleitern auch Gelenke vorgesehen sein, mittels denen die Klapprichtung der Gleiter beim Eintritt in den Sammelraum vorgegeben wird.

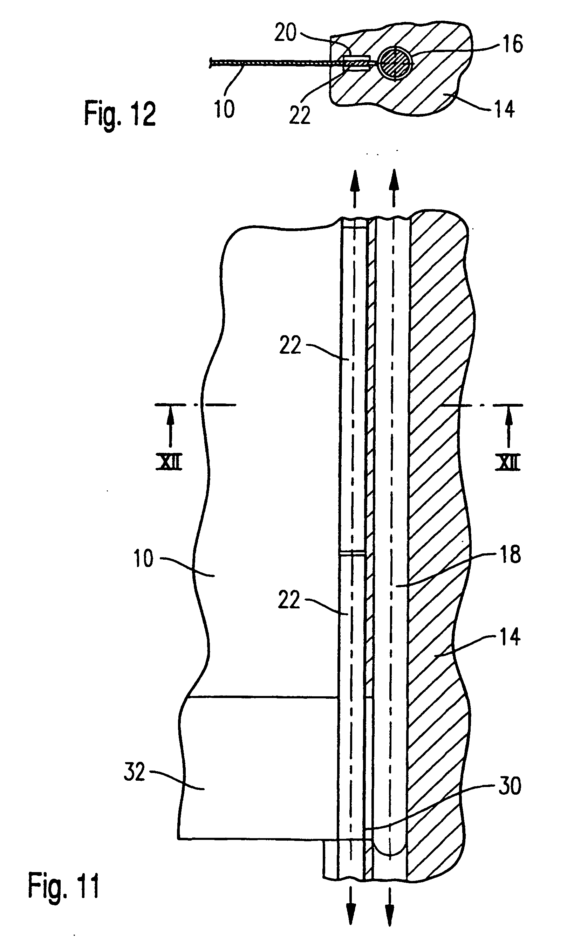

In den Figuren 11 bis 13 ist eine Sonnenschutzbaugruppe gemäß einer dritten Ausführungsform gezeigt. Für die von der ersten und der zweiten Ausführungsform bekannten Bauteile werden dieselben Bezugszeichen verwendet, und es wird insoweit auf die obigen Erläuterungen verwiesen.

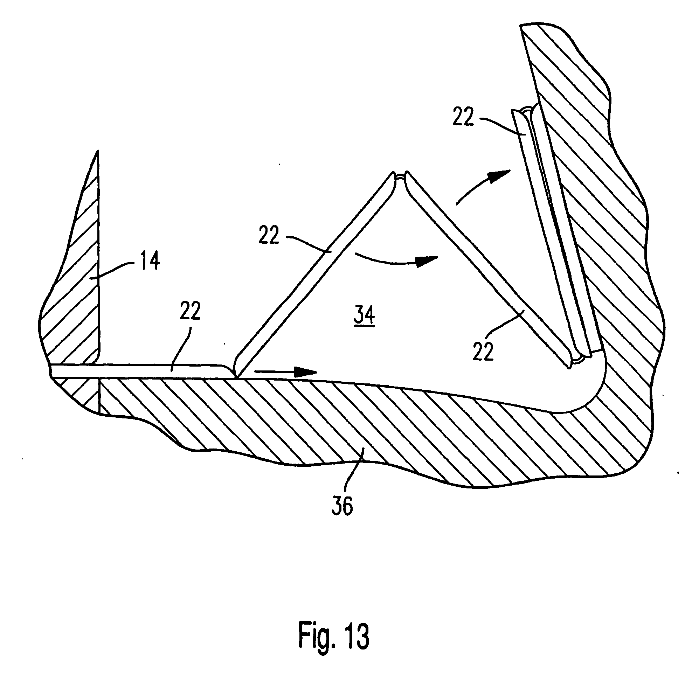

Die dritte Ausführungsform entspricht grundsätzlich der zweiten Ausführungsform, wobei sich die beiden Ausführungsformen dadurch unterscheiden, daß bei der dritten Ausführungsform die Gleiter ohne Zwischenelement unmittelbar aneinander anliegen. Die einander gegenüberliegenden Ränder der Gleiter sind abgerundet ausgeführt, und zwar in abwechselnden Richtungen mit einem Bogen, der sich über 90° erstreckt. Wie in Figur 13 zu sehen ist, ist also der vordere Rand eines Gleiters zur Unterseite hin abgerundet, während sein hinterer Rand zur Oberseite hin abgerundet ist. Beim unmittelbar benachbarten Gleiter ist es umgekehrt; der vordere Rand ist zur Oberseite abgerundet, und der hintere Rand ist zur Unterseite abgerundet.

Mittels der Ausgestaltung der Ränder wird mit geringem Aufwand dieselbe Wirkung erzielt wie mit der Vorspannung der Blattfeder: es wird die Richtung vorgegeben, in der sich benachbarte Gleiter 22 relativ zueinander zusammenlegen, wenn die Gleiter in den Sammelraum 34 eintreten. Als "Gelenk" dient dabei der Sonnenschutz 10.

Wenn der Sonnenschutz geschlossen werden soll, werden die aufeinanderfolgenden Gleiter vom Sonnenschutz 10 in die Führungsschiene 14 hineingezogen. Wenn der Sonnenschutz geöffnet und in den Sammelraum zurückgeschoben werden soll, wird die Schubkraft durch Anlage der Gleiter aneinander übertragen, wobei sich die Gleiter zusammenlegen, sobald sie nicht mehr von der Führungsschiene geführt werden und in den Sammelraum eintreten.

Bei einer alternativen, nicht in den Zeichnungen gezeigten Ausführungsform sind die aneinander anliegenden Ränder der Gleiter nach Art von Klappscharnieren ausgeführt, also ein Rand als Gelenkpfanne und ein Rand als Gelenkbolzen. Auch auf diese Weise läßt sich konstruktiv vorgeben, in welche Richtung sich die Gleiter im Sammelraum zusammenlegen.

### Bezugszeichenliste:

- 5:: Fahrzeugdach
- 7:: Dachöffnung
- 9:: Deckelteil
- 10:: Sonnenschutz
- 14:: Führungsschiene
- 16:: Aufnahmekanal
- 18:: Bedienelement
- 20:: Führungskanal
- 22:: Gleiter
- 24:: Gegenverzahnung
- 26:: Verzahnung
- 28:: Schlitz
- 30:: Abschlußteil
- 32:: Spriegel
- 34:: Sammelraum
- 36:: Sammelschiene
- 38:: Blattfeder

## Patentansprüche

1. Sonnenschutzbaugruppe für ein Fahrzeugdach, mit einem Sammelraum (34), zwei Führungsschienen (14), die sich ausgehend von dem Sammelraum (34) einander gegenüberliegend erstrecken, einem Sonnenschutz (10), der zwischen einer geöffneten Position, in der er sich im wesentlichen im Sammelraum befindet, und einer geschlossenen Position verstellt werden kann, in der er sich zwischen den Führungsschienen (14) erstreckt, und mehreren Gleitern (22), die mit den den Führungsschienen (14) zugeordneten Seitenrändern des Sonnenschutzes (10) verbunden und in den Führungsschienen (14) verschiebbar sind, wobei die Gleiter (22) eines Seitenrandes durch eine flexible Verbindung (10; 38) miteinander verbunden sind und der Sonnenschutz (10) aus einem biegeweichen, jedoch zugfesten Material besteht, wobei mindestens an zwei einander gegenüberliegenden Gleitern (22) ein Mitnehmer vorgesehen ist, der mit einem Bedienelement (18) zusammenwirkt, um die Gleiter (22) in den Führungsschienen zu verstellen, **dadurch gekennzeichnet, dass** der Mitnehmer eine Verzahnung (26) ist, die an jedem Gleiter (22) vorgesehen ist, wobei das Bedienelement mit einer Gegenverzahnung (24) versehen ist, die in der Führungsschiene (14) parallel zu den Gleitern (22) angeordnet ist und in die jede Verzahnung (26) eingreift, und wobei die flexible Verbindung zwischen den Gleitern (22) durch den Sonnenschutz (10) gebildet ist und die Gleiter (22) im Sammelraum (34) platzsparend translatorisch zusammengeschoben werden können, so daß der Sonnenschutz dann zwischen den einzelnen Gleitern schlaff durchhängt bzw. am Boden des Sammelraumes aufliegt.

2. Sonnenschutzbaugruppe für ein Fahrzeugdach, mit einem Sammelraum (34), zwei Führungsschienen (14), die sich ausgehend von dem Sammelraum (34) einander gegenüberliegend erstrecken, einem Sonnenschutz (10), der zwischen einer geöffneten Position, in der er sich im wesentlichen im Sammelraum befindet, und einer geschlossenen Position verstellt werden kann, in der er sich zwischen den Führungsschienen (14) erstreckt, und mehreren Gleitern (22), die mit den den Führungsschienen (14) zugeordneten Seitenrändern des Sonnenschutzes (10) verbunden und in den Führungsschienen (14) verschiebbar sind, wobei die Gleiter (22) eines Seitenrandes durch eine flexible Verbindung (10; 38) miteinander verbunden sind und der Sonnenschutz (10) aus einem biegeweichen, jedoch zugfesten Material besteht, wobei mindestens an zwei einander gegenüberliegenden Gleitern (22) ein Mitnehmer vorgesehen ist, der mit einem Bedienelement (18) zusammenwirkt, um die Gleiter (22) in den Führungsschienen zu verstellen, wobei der Mitnehmer an dem vordersten der Gleiter (22) jeder Führungsschiene (14) vorgesehen und fest mit dem Bedienelement (18) verbunden ist, wobei das Bedienelement translatorisch in der Führungsschiene (14) verstellbar ist **dadurch gekennzeichnet dass** die Verbindung (38) zwischen den Gleitern (22) drucksteif ist und die Gleiter (22) in dem Sammelraum (34) platzsparend aufeinandergefaltet werden können.

3. Sonnenschutzbaugruppe nach Anspruch 1 oder Anspruch 2, **dadurch gekennzeichnet, daß** der Sonnenschutz (10) aus einem Gewebe besteht.

4. Sonnenschutzbaugruppe nach Anspruch 1 oder Anspruch 2, **dadurch gekennzeichnet, daß** der Sonnenschutz (10) aus einer Kunststoff-Folie besteht.

5. Sonnenschutzbaugruppe nach einem der vorhergehenden Ansprüche, **dadurch gekennzeichnet, daß** die Gleiter (22) aus Kunststoff bestehen und auf die Seitenränder des Sonnenschutzes (10) aufgespritzt sind.

6. Sonnenschutzbaugruppe nach einem der vorhergehenden Ansprüche, **dadurch gekennzeichnet, daß** mindestens einer der Gleiter (22) eines Seitenrandes des Sonnenschutzes (10) mit dem gegenüberliegenden Gleiter des anderen Seitenrandes durch einen Spriegel (32) verbunden ist.

7. Sonnenschutzbaugruppe nach Anspruch 6, **dadurch gekennzeichnet, daß** der Spriegel (32) gewölbt ist.

8. Sonnenschutzbaugruppe nach Anspruch 1 oder Anspruch 2, **dadurch gekennzeichnet, daß** das Bedienelement (18) translatorisch verstellbar ist.

9. Sonnenschutzbaugruppe nach Anspruch 1, **dadurch gekennzeichnet, daß** das Bedienelement (18) rotatorisch verstellbar ist.

10. Sonnenschutzbaugruppe nach Anspruch 2, **dadurch gekennzeichnet, daß** die Verbindung zwischen den Gleitern (22) durch eine Blattfeder (38) gebildet ist.

11. Sonnenschutzbaugruppe nach Anspruch 2, **dadurch gekennzeichnet, daß** die Gleiter (22) unmittelbar aneinander anliegen können.

## Claims

1. A sunshade assembly for a vehicle roof, comprising a collecting space (34), two guide rails (14) which starting from the collecting space (34) extend so as to lie opposite each other, a sunshade (10) which can be shifted between an open position, in which it is located substantially within the collecting space, and a closed position, in which it extends between the guide rails (14), and a plurality of sliding elements (22) which are connected with the lateral edges, associated with the guide rails (14), of the sunshade (10) and are capable of being moved in the guide rails (14), the sliding elements (22) of a lateral edge being connected with each other by a flexible connection (10; 38), and the sunshade (10) being made of a material that is bendable, yet capable of bearing a tensile load, an entrainment means being provided at least on two opposite sliding elements (22), the entrainment means cooperating with an operating element (18) for shifting the sliding elements (22) in the guide rails, **characterized in that** the entrainment means is a toothing (26) which is provided on each of the sliding elements (22), the operating element being provided with a mating toothing (24) which is arranged in the guide rail (14) in parallelism with the sliding elements (22) and is engaged by each toothing (26), and the flexible connection between the sliding elements (22) being constituted by the sunshade (10) and the sliding elements (22) being adapted to be pushed together in the collecting space (34) in translational direction in a space-saving manner, so that the sunshade then hangs slackly between the individual sliding elements or rests on the bottom of the collecting space.

2. A sunshade assembly for a vehicle roof, comprising a collecting space (34), two guide rails (14) which starting from the collecting space (34) extend so as to lie opposite each other, a sunshade (10) which can be shifted between an open position, in which it is located substantially within the collecting space, and a closed position, in which it extends between the guide rails (14), and a plurality of sliding elements (22) which are connected with the lateral edges, associated with the guide rails (14), of the sunshade (10) and are capable of being moved in the guide rails (14), the sliding elements (22) of a lateral edge being connected with each other by a flexible connection (10; 38), and the sunshade (10) being made of a material that is bendable, yet capable of bearing a tensile load, an entrainment means being provided at least on two opposite sliding elements (22), the entrainment means cooperating with an operating element (18) for shifting the sliding elements (22) in the guide rails, the entrainment means being provided on the foremost of the sliding elements (22) of each guide rail (14) and being firmly connected with the operating element (18), the operating element being adapted to be shifted in the guide rail (14) in translational direction, **characterized in that** the connection (38) between the sliding elements (22) is resistant to bending and the sliding elements (22) can be folded onto each other in the collecting space (34) in a space-saving manner.

3. The sunshade assembly according to Claim 1 or Claim 2, **characterized in that** the sunshade (10) is made of a fabric.

4. The sunshade assembly according to Claim 1 or Claim 2, **characterized in that** the sunshade (10) is made of a plastic sheet.

5. The sunshade assembly according to any of the preceding claims, **characterized in that** the sliding elements (22) are made of plastics and are applied onto the lateral edges of the sunshade (10) by means of injection-molding.

6. The sunshade assembly according to any of the preceding claims, **characterized in that** at least one of the sliding elements (22) of one lateral edge of the sunshade (10) is connected with the opposite sliding element of the other lateral edge by means of a crosspiece (32).

7. The sunshade assembly according to Claim 6, **characterized in that** the crosspiece (32) is arched.

8. The sunshade assembly according to Claim 1 or Claim 2, **characterized in that** the operating element (18) can be shifted in translational direction.

9. The sunshade assembly according to Claim 1, **characterized in that** the operating element (18) can be rotationally shifted.

10. The sunshade assembly according to Claim 2, **characterized in that** the connection between the sliding elements (22) is constituted by a plate spring (38).

11. The sunshade assembly according to Claim 2, **characterized in that** the sliding elements (22) are adapted to directly rest against each other.

## Revendications

1. Ensemble de pare-soleil pour un toit de véhicule, comportant un espace collecteur (34), deux rails de guidage (14) qui s'étendent en vis-à-vis l'un de l'autre depuis l'espace collecteur (34), un pare-soleil (10) qui peut être réglé entre une position ouverte dans laquelle il se trouve sensiblement dans l'espace collecteur, et une position fermée dans laquelle il s'étend entre les rails de guidage (14), et plusieurs coulisseaux (22) qui sont reliés aux bords latéraux, associés aux rails de guidage, du pare-soleil (10) et qui sont déplaçables dans les rails de guidage (14), les coulisseaux (22) d'un bord latéral étant reliés les uns aux autres par une liaison (10 ; 38) flexible, et le pare-soleil (10) étant en un matériau souple à la flexion mais résistant à la traction, au moins sur deux coulisseaux (22) en vis-à-vis l'un de l'autre étant prévu un entraîneur qui coopère avec un élément de manutention (18) pour déplacer les coulisseaux (22) dans les rails de guidage, **caractérisé en ce que** l'entraîneur est une denture (26) qui est prévue sur chaque coulisseau (22), l'élément de manutention étant prévu avec une denture antagoniste (24) qui est agencée dans le rail de guidage (14) parallèlement aux coulisseaux (22) et dans laquelle s'engage chaque denture (26), et la liaison flexible entre les coulisseaux (22) étant formée par le pare-soleil (10), et les coulisseaux (22) pouvant être rassemblés en translation dans l'espace collecteur de façon peu encombrante, de sorte que le pare-soleil s'infléchit de manière lâche entre les coulisseaux individuels ou repose sur le fond de l'espace collecteur, respectivement.

2. Ensemble de pare-soleil pour un toit de véhicule, comportant un espace collecteur (34), deux rails de guidage (14) qui s'étendent en vis-à-vis l'un de l'autre depuis l'espace collecteur (34), un pare-soleil (10) qui peut être réglé entre une position ouverte dans laquelle il se trouve sensiblement dans l'espace collecteur, et une position fermée dans laquelle il s'étend entre les rails de guidage (14), et plusieurs coulisseaux (22) qui sont reliés aux bords latéraux, associés aux rails de guidage, du pare-soleil (10) et qui sont déplaçables dans les rails de guidage (14), les coulisseaux (22) d'un bord latéral étant reliés les uns aux autres par une liaison (10 ; 38) flexible, et le pare-soleil (10) étant en un matériau souple à la flexion mais résistant à la traction, au moins sur deux coulisseaux (22) en vis-à-vis l'un de l'autre étant prévu un entraîneur qui coopère avec un élément de manutention (18) pour déplacer les coulisseaux (22) dans les rails de guidage, l'entraîneur étant prévu sur le coulisseau (22) le plus en avant de chaque rail de guidage (14) et étant relié de manière solidaire à l'élément de manutention (18), l'élément de manutention étant déplaçable en translation dans le rail de guidage (14), **caractérisé en ce que** la liaison (38) entre les coulisseaux (22) est inflexible à la pression et les coulisseaux (22) peuvent être pliés les uns sur les autres dans l'espace collecteur (34) de façon peu encombrante.

3. Ensemble de pare-soleil selon la revendication 1 ou la revendication 2, **caractérisé en ce que** le pare-soleil (10) est en tissu.

4. Ensemble de pare-soleil selon la revendication 1 ou la revendication 2, **caractérisé en ce que** le pare-soleil (10) est en une feuille de matière plastique.

5. Ensemble de pare-soleil selon l'une des revendications précédentes, **caractérisé en ce que** les coulisseaux (22) sont en matière plastique et sont moulés par injection sur les bords latéraux du pare-soleil (10).

6. Ensemble de pare-soleil selon l'une des revendications précédentes, **caractérisé en ce qu'**au moins un des coulisseaux (22) d'un bord latéral du pare-soleil (10) est relié par une virole (32) au coulisseau, situé en vis-à-vis, de l'autre bord latéral.

7. Ensemble de pare-soleil selon la revendication 6, **caractérisé en ce que** la virole (32) est bombée.

8. Ensemble de pare-soleil selon la revendication 1 ou la revendication 2, **caractérisé en ce que** l'élément de manutention (18) est réglable en translation.

9. Ensemble de pare-soleil selon la revendication 1, **caractérisé en ce que** l'élément de manutention (18) est réglable en rotation.

10. Ensemble de pare-soleil selon la revendication 2, **caractérisé en ce que** la liaison entre les coulisseaux (22) est formée par un ressort à lames (38).

11. Ensemble de pare-soleil selon la revendication 2, **caractérisé en ce que** les coulisseaux (22) peuvent être directement adjacents les uns aux autres.
